# FASCICULE DE BREVET EUROPEEN

(11) **EP 0 642 198 B1**
(45) Date de publication et mention de la délivrance du brevet: **20.09.2000**
(21) Numéro de dépôt: 94401917.3
(22) Date de dépôt: 30.08.1994
(51) Int. Cl.: H02H 3/08, H02H 6/00

(54) **Dispositif de protection électronique d'une charge**
Elektronische Lastschutzvorrichtung
Electronic load protecting device

(30) Priorité: 01.09.1993 FR 9310490
(43) Date de publication de la demande: 08.03.1995
(73) Titulaire: Schneider Electric Industries SA, 92500 Rueil-Malmaison (FR)
(72) Inventeur: Baurand, Gilles, F-78360 Montesson la Borde (FR); Stentz, Antoine, F-92500 Rueil-Malmaison (FR)
(74) Mandataire: Saint Martin, René

(56) Documents cités:
- EP-A- 0 214 025
- EP-A- 0 352 987
- EP-A- 0 615 266
- DE-A- 2 618 061
- DE-A- 3 902 416
- FR-A- 2 309 063

## Description

La présente invention se rapporte à un dispositif de protection électronique destiné à la protection thermique d'une charge en interrompant l'alimentation en courant de cette charge, comprenant des capteurs de courant montés sur les fils de phase et connectés à des éléments résistifs d'un détecteur thermique, et un circuit électronique de traitement apte à fournir un ordre de commande en fonction de la surcharge. Un tel dispositif est divulgué dans la demande de brevet FR-A-2309063.

Il existe des appareils appelés relais thermiques qui protègent les machines électriques tournantes ou circuits de distribution en cas de surcharge par le contrôle du courant absorbé sur chacune des phases ou en cas de déséquilibre ou d'absence de phase. Un relais thermique comprend, pour chaque phase, un bilame échauffé par le courant de phase. Quand une surcharge se produit sur une phase, le bilame de cette phase surchargée fléchit et agit mécaniquement sur un mécanisme de déclenchement qui provoque l'ouverture de contacts coupant le courant d'alimentation de la machine électrique tournante ou du circuit de distribution. Le déclenchement en cas de déséquilibre ou d'absence de phase est obtenu par un dispositif différentiel.

Ces relais thermiques sont difficilement utilisables pour des courants supérieurs à 100 ampères environ. L'échauffement du bilame et donc le courant de déclenchement sont mal maîtrisés, du fait que des échauffements parasites se produisent.

On connaît par le brevet EP 0 214 025 ou EP 0 615 266 des appareils de protection équipés, pour chaque phase, d'un capteur de courant donnant une image du courant de phase. Un circuit électronique de traitement reçoit et traite les images des courants de phases dans le but de délivrer un ordre de déclenchement. Ils ne permettent par de détecter les déséquilibres de phase.

L'appareil que décrit le brevet EP 0 615 266, qui est un document selon l'article 54(3) CBE, est équipé d'un détecteur thermique constitué par des éléments résistifs chauffants parcourus par les courants de phases et thermiquement couplés à un capteur de température au moyen d'un corps de couplage thermique. Ce détecteur thermique permet de mémoriser de façon simple l'état thermique de la charge protégée par le relais.

Un autre type d'appareil de protection pourvu d'un module de mémoire thermique, sans capteur de température, est décrit dans le brevet FR 2 309 063. Cet appareil ne permet pas non plus de contrôler les déséquilibres de phase.

L'invention a notamment pour but de fournir un dispositif de protection électronique capable de contrôler des surcharges de courant et les déséquilibres des courants de phase, pour des courants importants, au moyen d'un détecteur thermique à éléments résistifs pouvant être sérigraphiés. Ce dispositif est insensible aux harmoniques de courants.

Le dispositif selon l'invention est caractérisé par le fait que les éléments résistifs du détecteur thermique sont alimentés par des courants redressés prélevés aux sorties de redresseurs associés aux capteurs de courant, lesdits éléments résistifs sont thermiquement couplés à un capteur de température connecté audit circuit électronique de traitement, et des signaux représentatifs des tensions aux bornes de chaque élément résistif sont envoyés sur un convertisseur analogique-digital du circuit électronique de traitement qui est du type à microprocesseur.

Selon une caractéristique, chaque élément résistif est relié à l'entrée du convertisseur analogique-digital via un diviseur de tension.

Selon une autre caractéristique, les différents éléments résistifs sont thermiquement couplés à un seul et même capteur de température par une plaque de couplage thermique réalisée en un matériau résistant à la température et isolant électriquement.

Selon une caractéristique, le circuit électronique de traitement commande un organe moteur qui manoeuvre une serrure manoeuvrant des contacts de puissance disposés sur les fils de phase.

L'invention va maintenant être décrite avec plus de détail en se référant à des modes de réalisation donnés à titre d'exemples et représentés par les dessins annexés sur lesquels:
- la figure 1 est un schéma de disjoncteur-moteur incluant le dispositif de protection selon l'invention;
- la figure 2 est un schéma de relais de protection thermique de moteur incluant le dispositif de protection selon l'invention;
- la figure 3 est un schéma en perspective éclatée du détecteur thermique équipant le dispositif de protection qui s'intègre aux appareils des figures 1 et 2.

Le dispositif de protection thermique, repéré 2 dans son ensemble sur les dessins, est destiné à interrompre le courant sur une ligne L₁, L₂, L₃ alimentant une charge triphasée constituée ici par un moteur électrique triphasé M, en cas de déséquilibre entre les courants de phases et/ou de surcharge.

Sur chaque fil de phase L₁ ou L₂ ou L₃ est disposé un capteur de courant T₁ ou T₂ ou T₃, respectivement, qui est constitué par un transformateur d'intensité. Ces transformateurs sont des capteurs connus et habituellement utilisés pour les mesures de courants. Les sorties secondaires de chaque transformateur T₁ ou T₂ ou T₃ sont branchées sur un redresseur R₁ ou R₂ ou R₃, respectivement, qui fournit en sortie un courant redressé sur une ligne X₁-Y₁, X₂-Y₂, X₃-Y₃, respectivement, desservant un détecteur thermique 1 et un circuit électronique de traitement 3.

Les différents courants redressés sortant des redresseurs R₁, R₂, R₃ alimentent des éléments résistifs chauffants ou résistances 11, 12, 13 du détecteur thermique 1. Chaque résistance 11 ou 12 ou 13 est branchée sur les sorties d'un redresseur R₁, R₂, R₃, respectivement, de manière à être parcourue par le courant redressé fourni par ce redresseur. Chaque résistance 11 ou 12 ou 13 présente deux broches de connexion 111 et 112, 121 et 122, 131 et 132, respectivement, qui permettent les connexions avec le redresseur associé. La première broche 111 ou 121 ou 131 est reliée à une sortie X₁, X₂, X₃, respectivement, d'un redresseur et la seconde broche 112, 122, 132, respectivement, à la seconde sortie Y₁, Y₂, Y₃, respectivement, du même redresseur.

Les broches de connexion 112, 122, 132 appartenant respectivement aux résistances 11, 12, 13 sont reliées en commun aux sorties secondaires Y₁, Y₂, Y₃ des redresseurs R₁, R₂, R₃, par l'intermédiaire d'un circuit d'alimentation 4 qui assure l'alimentation du circuit de traitement 3.

Les différents résistances 11, 12, 13 sont thermiquement couplées à un seul et même capteur de température 14. Elles sont séparées de ce capteur de température 14 par une plaque de couplage thermique 15 réalisée en un matériau résistant à la température et isolant électriquement. De préférence, la plaque de couplage thermique 15 est réalisée en matériau céramique tel que l'alumine.

Chaque résistance 11, 12, 13 est sérigraphiée sur la plaque de couplage thermique 15. Le capteur de température 14 peut être sérigraphié sur la face de la plaque de couplage 15 qui est opposée à la face sur laquelle sont sérigraphiées les résistances 11, 12, 13. La capteur 14 peut être indépendant de la plaque de couplage thermique 15 et il est alors en contact direct avec celle-ci.

Le capteur de température 14 est un composant connu en soi du type thermistance. Il est constitué d'une plaquette 143 de détection de température à laquelle sont raccordées des broches de connexion 141, 142.

Les résistances 11, 12, 13, la plaque de couplage thermique 15 et le capteur de température 14 sont logés dans un boîtier constitué de plusieurs parties 161, 162 et réalisé en un matériau électriquement isolant.

Le signal de sortie du capteur 14 est envoyé au circuit électronique de traitement 3 qui traite les signaux reçus et délivre un ordre de déclenchement ou de commande. Ce circuit électronique de traitement 3 est un circuit numérique à microprocesseur.

Des valeurs représentatives des tensions aux bornes des résistances 11, 12, 13 sont envoyées par V₁ ou V₂ ou V₃ au convertisseur analogique-numérique 31 du circuit électronique de traitement 3 de manière que celui-ci détecte les déséquilibres ou coupures de phases. Une borne de chaque résistance 11, 12 ou 13 est reliée, via un diviseur de tension 5 et une liaison V₁ ou V₂ ou V₃, à l'entrée d'un convertisseur analogique-digital 31 associé au circuit électronique de traitement 3. L'autre borne de la résistance est reliée au circuit 4 qui sert à l'alimentation du circuit électronique de traitement 3 et est relié aux sorties secondaires des redresseurs R₁, R₂, R₃.

Une entrée du circuit de traitement 3 est connectée à un organe de réglage 63 du courant moteur. Une autre entrée du circuit de traitement 3 est connectée à un capteur de compensation 61 qui fournit un signal représentatif de la température ambiante à ce circuit de traitement. La signalisation de l'état de fonctionnement de l'appareil est assurée par un voyant à diode électroluminescente 62 (LED) commandé par le circuit à microprocesseur 3.

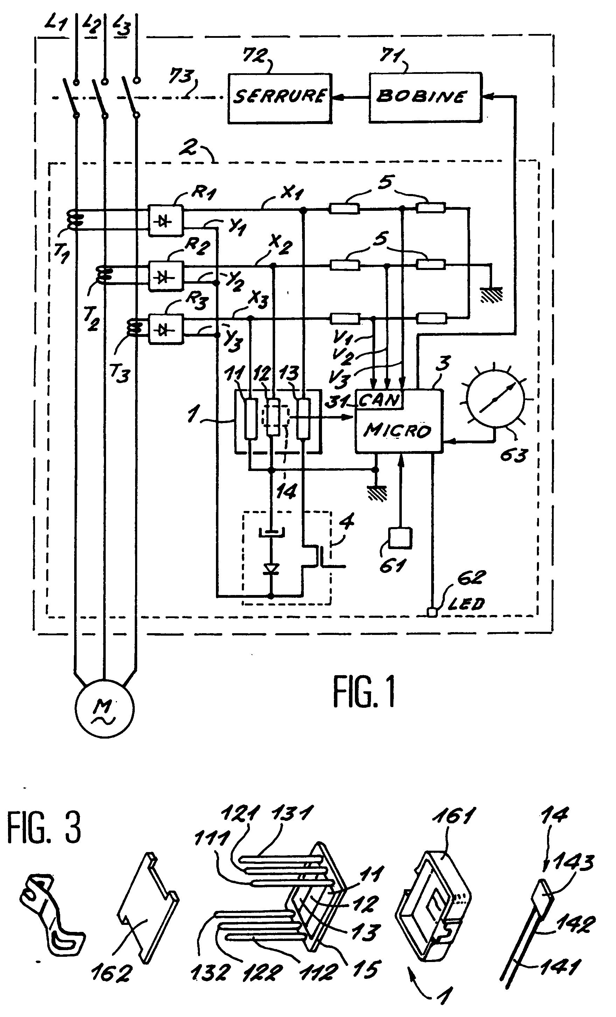

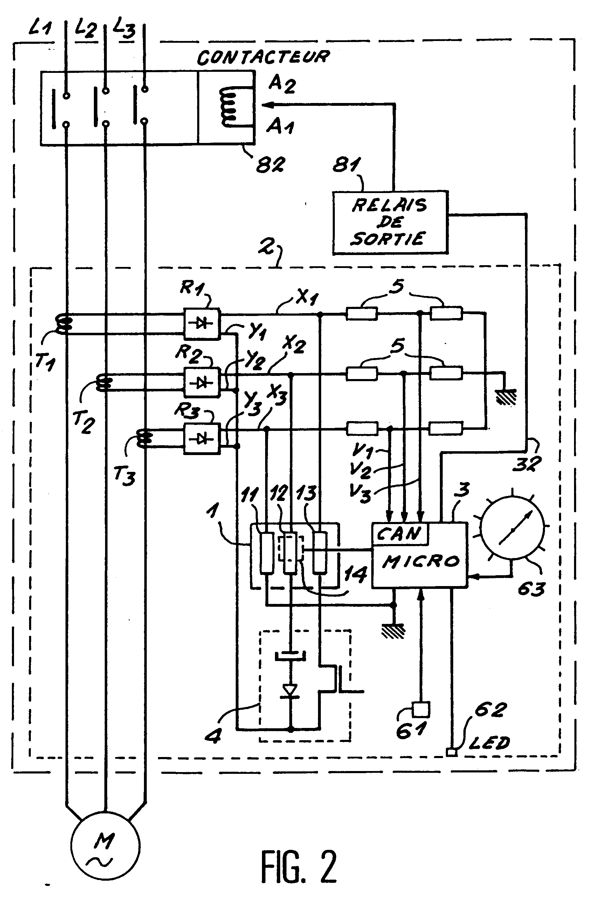

Le dispositif de protection thermique 2 peut être monté dans un disjoncteur tel que celui de la figure 1 ou dans un relais thermique tel que celui de la figure 2.

Dans le disjoncteur de la figure 1, le microprocesseur calcule, en fonction du signal donné par le capteur de température 14, les surcharges ou déséquilibres de phases et déclenche par l'intermédiaire de l'organe moteur 71 constitué par une bobine, la serrure 72 qui manoeuvre les contacts coupant l'alimentation du moteur. La serrure 72 manoeuvre via une liaison mécanique 73 les contacts de puissance qui sont disposés sur les fils de phase L₁, L₂, L₃.

Dans le relais thermique de la figure 2, le microprocesseur agit via une sortie 32 sur un relais de sortie 81 qui commande un contacteur 82 apte à couper l'alimentation du moteur.

Le fonctionnement de dispositif va maintenant être expliqué.

Chaque résistance 11, 12, 13 du détecteur thermique 1 est connectée aux sortie d'un redresseur associé à un transformateur de courant. Elle est donc parcourue par un courant redressé qui est proportionnel au courant d'une phase L₁ ou L₂ ou L₃. L'échauffement des résistances 11, 12, 13 est mesuré par le capteur de température 14 qui donne, en permanence, l'image de l'échauffement thermique provoqué par les images des courants de phases.

Lorsque l'image thermique donnée par le détecteur thermique 1 dépasse un seuil déterminé, le microprocesseur 3 génère un ordre de déclenchement.

Les valeurs représentatives des tensions aux bornes des résistances 11, 12, 13 sont appliquées via les diviseurs de tension 5 et V₁ ou V₂ ou V₃ sur les entrées du convertisseur analogique-numérique 31. Lorsque les valeurs représentatives des tensions mesurées aux bornes des résistances 11, 12, 13 traduisent un déséquilibre de phases ou une absence de phase, le microprocesseur du circuit 3 génère un ordre de déclenchement.

Dans le disjoncteur moteur de la figure 1, l'ordre de déclenchement délivré par le microprocesseur commande, par l'intermédiaire de la bobine 71, la serrure 72 qui ouvre par la commande 73 les contacts de puissance disposés sur la ligne.

Dans le relais thermique de la figure 2, l'ordre de déclenchement délivré par le microprocesseur commande, par l'intermédiaire du relais 81, le contacteur 82.

En cas de coupure de l'alimentation, on conserve, grâce au détecteur thermique 1, une image thermique de l'échauffement du moteur.

Il est bien entendu que l'on peut, sans sortir du cadre de l'invention qui est défini par les revendications annexées, imaginer des variantes et des perfectionnements de détail et de même envisager l'emploi de moyens équivalents.

## Revendications

1. Dispositif de protection électronique destiné à la protection thermique d'une charge (M) en interrompant l'alimentation en courant de cette charge, comprenant des capteurs de courant (T₁, T₂, T₃) montés sur les fils de phase (L₁, L₂, L₃) et connectés à des éléments résistifs (11, 12, 13) d'un détecteur thermique (1), et un circuit électronique de traitement (3) apte à fournir un ordre de commande en fonction de la surcharge, caractérisé par le fait que les éléments résistifs (11, 12, 13) du détecteur thermique sont alimentés par des courants redressés prélevés aux sorties de redresseurs (R1, R2, R2) associés aux capteurs de courant (T1, T2, T3), lesdits éléments résistifs (11, 12, 13) sont thermiquement couplés à un capteur de température (14) connecté audit circuit électronique de traitement (3), et des signaux représentatifs des tensions aux bornes de chaque élément résistif (11, 12, 13) sont envoyés sur un convertisseur analogique-digital (31) du circuit électronique de traitement (3) qui est du type à microprocesseur.

2. Dispositif selon la revendication 1, caractérisé par le fait que chaque élément résistif (11, 12, 13) est relié à l'entrée du convertisseur analogique-digital (31) via un diviseur de tension (5).

3. Dispositif selon l'une quelconque des revendications précédentes, caractérisé par le fait que les différents éléments résistifs (11, 12, 13) sont thermiquement couplés à un seul et même capteur de température (14) par une plaque de couplage thermique (15) réalisée en un matériau résistant à la température et isolant électriquement.

4. Dispositif selon l'une quelconque des revendications précédentes, caractérisé par le fait que chaque élément résistif (11, 12, 13) est sérigraphié sur la plaque de couplage thermique (15).

5. Dispositif selon l'une quelconque des revendications précédentes, caractérisé par le fait que chaque élément résistif (11, 12, 13) est relié à un circuit (4) qui sert à l'alimentation du circuit électronique de traitement (3) et est relié aux sorties secondaires des redresseurs (R₁, R₂, R₃) associés aux capteurs de courant.

6. Dispositif selon l'une quelconque des revendications précédentes, caractérisé par le fait que le circuit électronique de traitement (3) commande un organe moteur (4) qui manoeuvre une serrure (5) manoeuvrant des contacts de puissance disposés sur les fils de phase (L₁, L₂, L₃).

## Claims

1. Electronic protection device intended to protect a load (M) thermally by cutting the current supply to the load, the device comprising current sensors (T₁, T₂, T₃) mounted on phase conductors (L₁, L₂, L₃) and connected to the resistors (11, 12, 13) of a temperature detector (1), and an electronic processing circuit (3) capable of issuing an order depending on the overload, characterized in that resistors (11, 12, 13) of the temperature detector are powered by rectified currents drawn from the outputs of rectifiers (R1, R2, R3) associated with current sensors (T1, T2, T3), said resistors (11, 12, 13) being thermally coupled to a temperature sensor (14) connected to said electronic processing circuit (3), and signals representing the voltage at the terminals of each resistor (11, 12, 13) are sent to an analogue/digital converter (31) of the electronic processing circuit (3), said analogue/digital converter being a microprocessor or similar converter.

2. Device of claim 1 characterized in that each resistor (11, 12, 13) is connected to the input of the analogue/digital converter (31) via a voltage divider (5).

3. Device of any of the previous claims characterized in that the various resistors (11, 12, 13) are coupled thermally to a single and common temperature sensor (14) by a thermal coupling plate (15) made in a temperature-resistant material that does not conduct electricity.

4. Device of any of the previous claims characterized in that each resistor (11, 12, 13) is printed on the thermal coupling plate (15).

5. Device of any of the previous claims characterized in that each resistor (11, 12, 13) is connected to a circuit (4) used to supply the electronic processing circuit (3) and is connected to the secondary outputs of the rectifiers (R1, R2, R3) associated with the current sensors.

6. Device of any of the previous claims characterized in that electronic processing circuit (3) controls a driving element (4) that operates a lock (5) which in turn operates power contacts arranged on phase conductors (L₁, L₂, L₃).

## Patentansprüche

1. Elektronische Schutzvorrichtung zum thermischen Schutz einer Last (M) durch Unterbrechung der Stromversorgung dieser Last, mit auf den Phasendrähten (L₁, L₂, L₃) montierten Stromsensoren (T₁, T₂, T₃), die an Widerstandselementen (11, 12, 13) eines Thermodetektors (1) angeschlossen sind, und einem elektronischen Verarbeitungskreis (3), der entsprechend der Überlast einen Steuerbefehl liefern kann, dadurch gekennzeichnet, dass die Widerstandselemente (11, 12, 13) des Thermodetektors von gleichgerichteten Strömen versorgt werden, die an den Ausgängen von Gleichrichtern (R1, R2, R3) entnommen werden, denen Stromsensoren (T1, T2, T3) zugeordnet sind, wobei die besagten Widerstandselemente (11, 12, 13) thermisch an einem am besagten elektronischen Verarbeitungskreis (3) angeschlossenen Temperatursensor (14) angekoppelt sind, und dass die Spannungen an den Klemmen eines jeden Widerstandselements (11, 12, 13) darstellende Signale an einen Analog-/Digital-Wandler (31) des elektronischen Verarbeitungskreises (3) gesandt werden, der vom Typ mit Mikroprozessor ist.

2. Vorrichtung nach Anspruch 1, dadurch gekennzeichnet, dass jedes Widerstandselement (11, 12, 13) mit dem Eingang des Analog-/Digital-Wandlers (31) über einen Spannungsteiler (5) verbunden ist.

3. Vorrichtung nach einem der vorstehend genannten Ansprüche, dadurch gekennzeichnet, dass die verschiedenen Widerstandselemente (11, 12, 13) thermisch über eine thermische Kopplungsplatte (15) aus einem temperaturbeständigen und elektrisch isolierendem Material an einem einzigen und gleichen Temperatursensor (14) angekoppelt sind.

4. Vorrichtung nach einem der vorstehend genannten Ansprüche, dadurch gekennzeichnet, dass jedes Widerstandselement (11, 12, 13) auf die thermische Kopplungsplatte (15) aufgedruckt ist.

5. Vorrichtung nach einem der vorstehend genannten Ansprüche, dadurch gekennzeichnet, dass jedes Widerstandselement (11, 12, 13) mit einem Kreis (4) verbunden ist, der zur Versorgung des elektronischen Verarbeitungskreises (3) dient und an den Sekundärausgängen der den Stromsensoren zugeordneten Gleichrichter (R₁, R₂, R₃) angeschlossen ist.

6. Vorrichtung nach einem der vorstehend genannten Ansprüche, dadurch gekennzeichnet, dass der elektronische Verarbeitungskreis (3) ein Antriebsorgan (4) steuert, das ein Schloss (5) betätigt, das auf den Phasendrähten (L₁, L₂, L₃) angeordnete Leistungskontakte betätigt.
